# EUROPÄISCHE PATENTSCHRIFT

(11) **EP 0 702 889 B1**
(45) Veröffentlichungstag und Bekanntmachung des Hinweises auf die Patenterteilung: **16.10.2002**
(21) Anmeldenummer: 95107892.2
(22) Anmeldetag: 24.05.1995
(51) Int. Cl.: A01C 15/00, A01C 17/00

(54) **Zentrifugaldüngerstreuer**
Broadcaster
Epandeur centrifugal

(30) Priorität: 20.09.1994 DE 4433475
(43) Veröffentlichungstag der Anmeldung: 27.03.1996
(73) Patentinhaber: Amazonen-Werke H. Dreyer GmbH & Co. KG, 49205 Hasbergen (DE)
(72) Erfinder: Scheufler, Bernd, Dr., D-49205 Hasbergen (DE); Walter, Achim, D-49078 Osnabrück (DE)

(56) Entgegenhaltungen:
- EP-A- 0 551 949

## Beschreibung

Die Erfindung betrifft einen Zentrifugaldüngerstreuer gemäß des Oberbegriffes des Patentanspruches 1.

Ein derartiger Zentrifugaldüngerstreuer wird in der EP-A-05 51 949 (Fig 10 und 12) beschrieben.

Ein weiterer Zentrifugaldüngerstreuer ist beispielsweise durch die DE-OS 34 20 669 bekannt. Bei diesem Zentrifugaldüngerstreuer ist jeder Schleuderscheibe eine Grenzstreueinrichtung zur Erzeugung eines Streubildes mit einer zur Grenze steil abfallenden Streustärke und zur Begrenzung der Wurfweite der Düngerpartikel bis zur Grenze bekannt.

Der eine der beiden Grenzstreuschirme ist in der Mitte zwischen den beiden Scheiben angeordnet, während der andere Grenzsteuschirm seitlich des Streuwerkes und der der Grenze zugewandten Seite der Scheibe angeordnet ist.

Der Erfindung liegt die Aufgabe zugrunde, eine einfach ausgebildete Grenzstreueinrichtung zu schaffen. Diese Aufgabe wird erfindungsgemäß durch die kennzeichnenden Maßnahmen des Anspruches 1 gelöst. Infolge dieser Maßnahme ist es möglich, nur eine einzige Grenzstreueinrichtung für verschiedene Arbeitsbreiten verwenden zu können.

Damit der Dünger nicht nach vorn über den Streuer hinausgeworfen wird, ist vorgesehen, daß die Leitelemente von der Schleuderscheibe aus gesehen nach hinten und außen gerichtet sind.

In einer Ausführungsform ist vorgesehen, daß die Leitelemente aufrecht stehend angeordnet sind.

Es ist jedoch auch möglich, daß die Leitelemente eine in sich verdrehte Leitfläche aufweisen. Hierdurch werden die Düngerkörner zunächst abgebremst und umgelenkt und so in horizontaler Richtung in ihrer Flugbahn beeinflußt.

Es kann für einige Arbeitsbreiten und Düngersorten vorteilhaft sein, daß die Leitelemente aus einer aufrechten Leitfläche in eine schräge oder horizontale Leitfläche übergehen.

Um in einfacher Weise die Grenzstreueinrichtung vom Schlepper aus umstellen zu können, ist vorgesehen, daß die Grenzstreueinrichtung über eine Fernbedienungseinrichtung wahlweise in Grenzstreustellung und Außerbetriebstellung schwenkbar ist.

Um die Grenzstreueinrichtung an verschiedene Arbeitsbreiten und Düngersorten anpassen zu können, ist vorgesehen, daß die Grenzstreurichtung in verschiedene vorzugsweise festlegbare Grenzstreupositionen einstellbar ist.

Desweiteren ist vorgesehen, daß die Grenzstreuvorrichtung in eine Stellung für das Normalstreuen bringbar ist, in welcher die Leitelemente die Flugrichtung der Düngerpartikel über eine quer zur Fahrtrichtung liegende Begrenzungsebene, die durch die vordere Rotationsbahn der äußeren Teile der Wurfschaufel verläuft, zumindest annähernd nach vorn begrenzen.

Somit erfüllt die Grenzstreueinrichtung je nach den Erfordernissen verschiedene Aufgaben. Die Grenzstreueinrichtung wirkt somit in der einen Einstellung als Grenzstreueinrichtung zur Begrenzung der Wurfweite und zur Erzeugung eines Streubildes mit einer steil abfallenden Streustärke, andererseits wirkt sie nur als Begrenzung des Abwurfsektors, wie dies beispielsweise in der deutschen Offenlegungsschrift 38 20 681 beschrieben ist.

Um in einfacher Weise die Grenzstreueinrichtung an die verschiedenen Arbeitsbreiten und an verschiedene Düngersorten anpassen zu können, ist vorgesehen, daß die Leitelemente der Grenzstreueinrichtung einzeln oder gruppenweise verstellbar angeordnet sind.

Desweiteren kann vorgesehen sein, daß die Leitelemente in eine Stellung innerhalb des Düngerstromes bringbar sind, in welcher sie die Flugbahn der abgeschleuderten Düngerpartikel nicht beeinflussen. Durch diese Maßnahme wird erreicht, daß lediglich durch Verstellen der Leitelemente die Grenzstreueinrichtung, ohne die Grenzstreueinrichtung aus dem Düngerstrom heraus schwenken zu müssen, in Arbeits- bzw. Außerbetriebsposition zu bringen ist.

Weitere Einzelheiten der Erfindung sind den übrigen Unteransprüchen, der Beispielsbeschreibung und den Zeichnungen zu entnehmen. Hierbei zeigen
- Fig. 1: einen Schleuderdüngerstreuer mit Grenzstreueinrichtung in der Ansicht von hinten,
- Fig. 2: die Anordnung der Grenzstreueinrichtung in der Ansicht II - II,
- Fig. 3: eine weitere Grenzstreueinrichtung in vergrößertem Maßstab in der gleichen Darstellungsweise wie in Fig. 2, wobei jedoch nur die linke Streuscheibe dargestellt ist.
- Fig. 4: ein Grenzstreubild in schematischer Darstellung,
- Fig. 5: eine weitere Grenzstreueinrichtung gemäß der Darstellung nach Fig. 3,
- Fig. 6: eine Leitfläche der Grenzstreueinrichtung nach Fig. 5 in der Ansicht VI-VI,
- Fig. 7: eine weitere Grenzstreueinrichtung in vergrößertem Maßstab entsprechend der Darstellung nach Fig. 3,
- Fig. 8: eine weitere Grenzstreueinrichtung entsprechend der Darstellung nach Fig. 3.

Der Schleuderdüngerstreuer weist den Vorratsbehälter 1, den Rahmen 2 und die unterhalb der beiden trichterförmigen Behälterteile 3 und 4 rotierend angeordneten Schleuderscheiben 5, auf denen die Wurfschaufeln 6 angeordnet sind, auf. Den Schleuderscheiben 5 werden die sich im Vorratsbehälter 1 befindlichen Düngemittel über die in den Bodenplatten 7 angeordneten Auslauföffnungen, welche jeweils mittels der Schieber 8 in unterschiedlichen Öffnungsweiten einstellbar und verschließbar sind, zugeführt. Die den um die aufrechten Achsen 9 rotierend angetriebenen Schleuderscheiben 5 zugeführten Düngermittelpartikel werden von den Wurfschaufeln 6 in Breitverteilung über die zu bestreuende Fläche ausgestreut. Die Schleuderscheiben 5 werden jeweils in Pfeilrichtung 10 angetrieben, wobei sie entgegen der Fahrtrichtung 11 auf der Rückseite des Schleuderdüngerstreuers auseinander drehen. Die Düngermittelpartikel werden von den Wurfschaufeln 6 in Richtung der gestrichelten Linien 12 von den Schleuderscheiben 5 abgeschleudert.

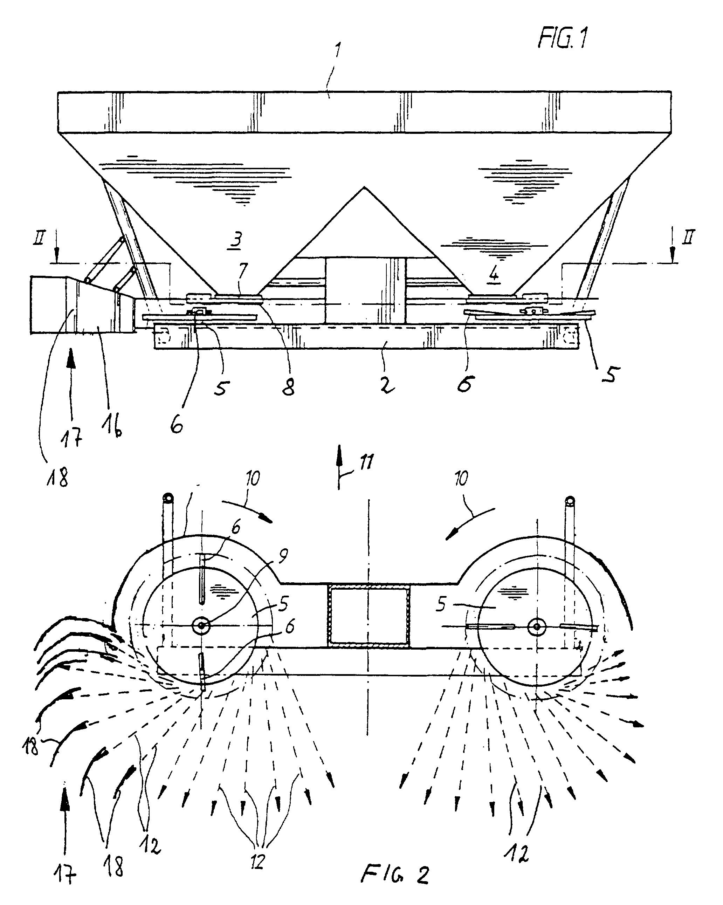

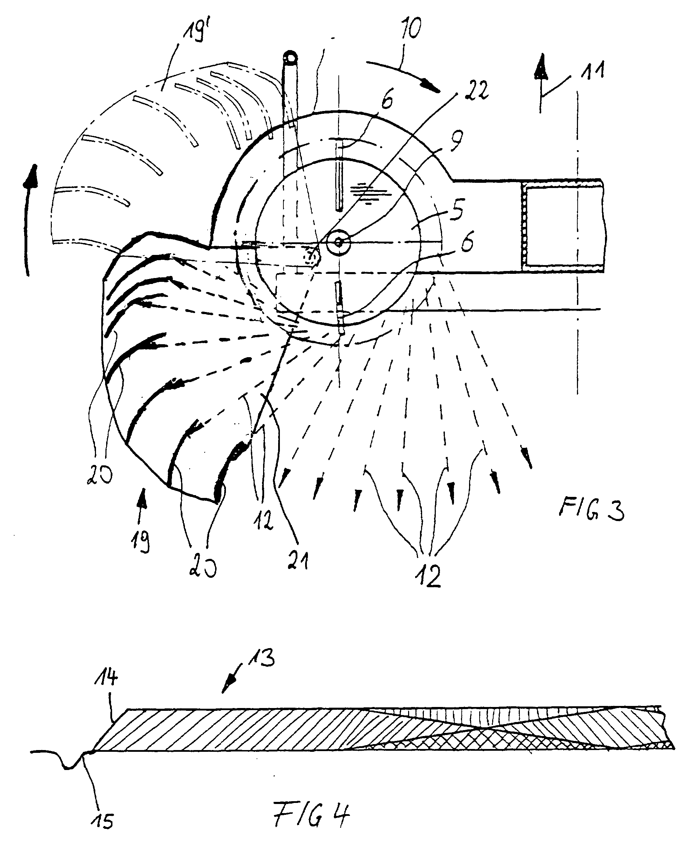

Um das in Fig. 4 dargestellte Grenzstreubild 13 mit der steil abfallenden Streuflanke 14 im Bereich der Feldrandgrenze 15 zu erzielen wird die als Grenzstreuschirm 16 ausgebildete Grenzstreueinrichtung 17 in die in Fig. 1 dargestellte Grenzstreuposition geschwenkt. Der Grenzstreuschirm 16 weist mehrere aufrecht stehende schräg nach hinten außen gekrümmte Leitflächen 18 auf, welche die abgeschleuderten Düngerpartikel derart abbremsen und umlenken, daß das in Fig. 4 dargestellte Grenzstreubild 13 erzielt wird. Nach Beenden des Grenzstreuens wird die Grenzstreueinrichtung 17, die mittels einer Aufhängung 18 am Rahmen 2 des Schleuderdüngerstreuers befestigt ist, nach oben geschwenkt, so daß die Leitflächen 18 des Grenzstreuschirmes 16 die Flugbahn der abgeschleuderten Düngerpartikel nicht beeinflussen.

Die Grenzstreueinrichtung 17 ist nur der der Grenze 15 zugewandten Schleuderscheibe 5 zugeordnet und auf der der Grenze 15 zugewandten Seite der Schleuderscheibe 5 angeordnet.

Mittels geeigneter Mittel wird die Grenzstreueinrichtung 17 wahlweise in die in Fig. 1 dargestellte Grenzstreuposition oder in nach oben geschwenkter Außerbetriebstellung gehalten.

Die Grenzstreueinrichtung 19 gemäß Fig. 3 weist die aufrechten Leitelemente 20 auf, welche auf einem Tragkörper 21 befestigt sind. Der Tragkörper 21 ist mittels des Gelenkes 22 an dem Rahmen 2 der Maschine angeordnet und aus der in Fig. 3 mit durchzogenen Linien dargestellten Grenzstreuposition in die in Fig. 3 mit gestrichelten Linien dargestellten Außerbetriebsposition 19' zu verschwenken. Desweiteren kann die Grenzstreueinrichtung 19 nur um einen Teilweg verschwenkt werden, so daß nur ein Teil der aufrechten Leitelemente 20 die Düngermittelpartikel umlenkt, so daß die Leitelemente 20 der Grenzstreueinrichtung 19 lediglich die Wurfrichtung der Düngerpartikel in Fahrtrichtung 11 nach vorn begrenzen, wie dieses in der deutschen Offenlegungsschrift 38 20 681 beschrieben ist. In diesen Positionen nimmt die Grenzstreueinrichtung 19 für das Grenzstreuen eine Stellung ein, in welcher die Leitelemente 20 die Flugrichtung der Düngerpartikel über eine quer zur Fahrtrichtung 11 liegende Begrenzungsebene, die durch die vordere Rotationsbahn der äußeren Teile der Wurfschaufeln 6 verläuft, zumindest annähernd nach vorn begrenzen.

Der Grenzstreueinrichtung 19 kann zum Verschwenken aus der Grenzstreustellung in die Außerbetriebstellung 19' und zum Verschwenken in Zwischenpositionen eine nicht dargestellten Fernbedienungseinrichtung zugeordnet sein.

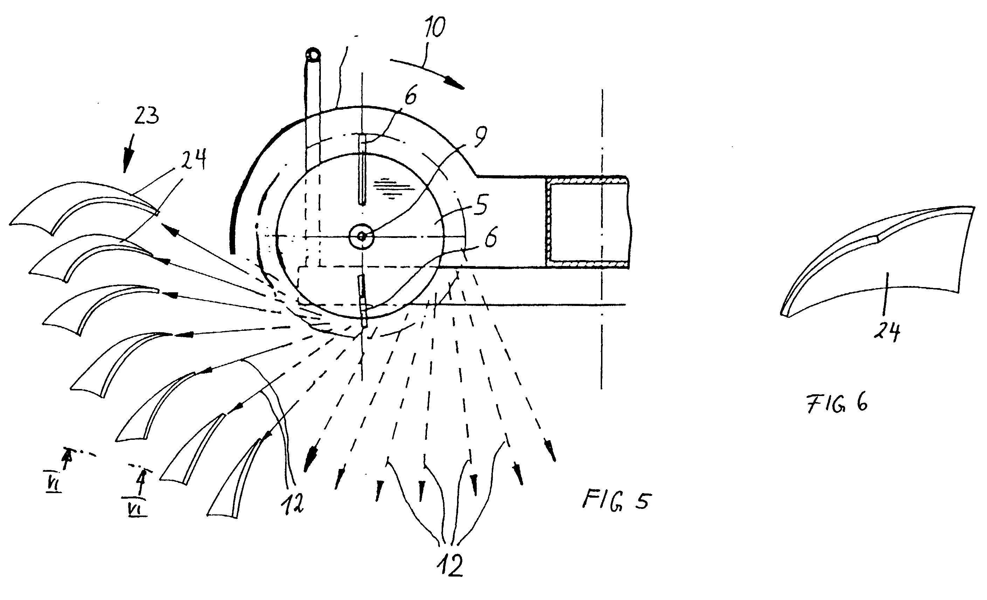

Die Fig. 5 zeigt eine weitere Grenzstreuvorrichtung 23, wobei nur die Leitelemente 24 dargestellt sind. Die Leitelemente 24 dieser Grenzstreueinrichtung 23 weisen eine in sich verdrehte Leitfläche auf. Die Leitelemente 24 gehen aus einen aufrechten Leitflächenbereich in einen schrägen Leitflächenbereich über. Hierdurch werden die Düngermittelpartikel nach hinten und unten umgelenkt, so daß eine gezielte Umlenkung der Flugbahn der Düngerpartikel erreicht wird, so daß die Düngerpartikel gezielt abgeworfen werden. Somit wird das in Fig. 4 dargestellte Grenzstreubild 13 mit steil abfallender Streuflanke 14 erreicht.

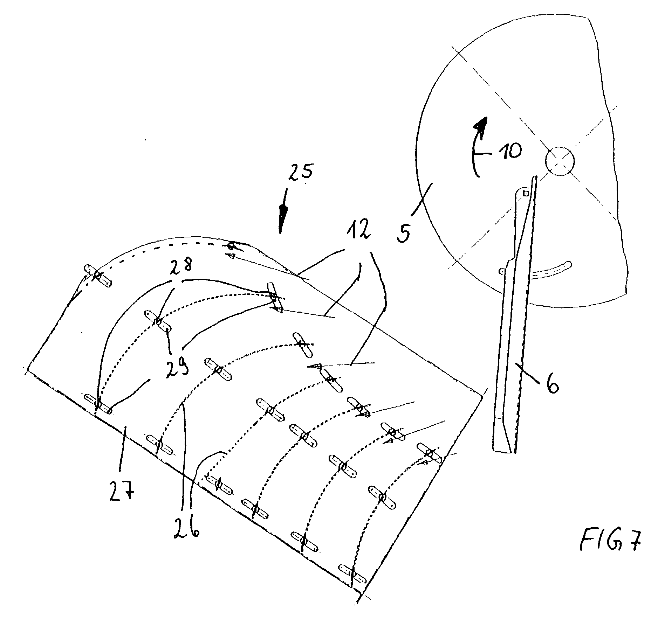

Die Grenzstreueinrichtung 25 gemäß Fig. 7 weist die aufrechten Leitelemente 26 auf, welche an einem von einer Platte gebildeten Tragkörper 27 befestigt. sind. Die Leitelemente 26 sind verstellbar an dem Tragkörper 27 angeordnet, so daß die Leitelemente 26 der Grenzstreueinrichtung 25 auf die Streueigenschaften des auszustreuenden Materials sowie auf den Abstand der Feldgrenze zum Streuer individuell eingestellt werden können. Hierzu sind die Leitelemente 26 mittels geeigneter Befestigungsmittel 28 in Langlöchern 29 verschiebbar an dem Tragkörper 27 befestigt.

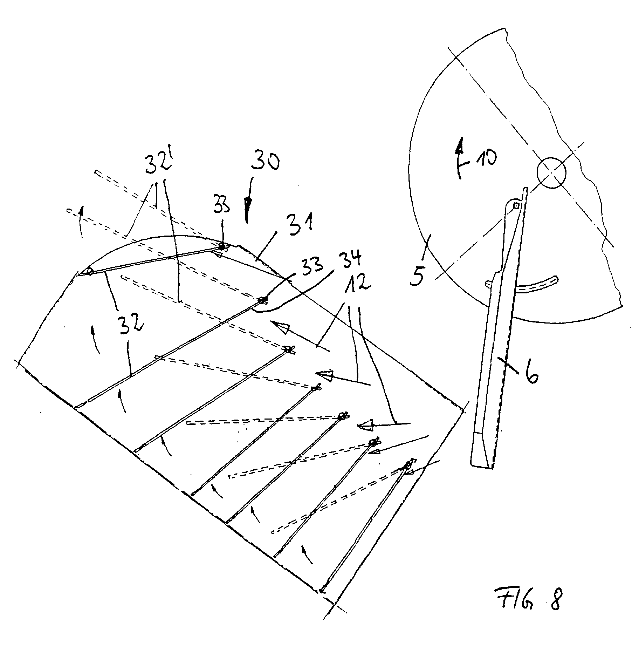

Die Grenzstreueinrichtung 30 gemäß Fig. 8 weist die an dem Tragkörper 31 befestigten aufrechten Leitelemente 32 auf, welche mittels Schwenkbolzen 33 in ihrem inneren Bereich 34 an dem Tragkörper 31 befestigt sind. Hierdurch ist es möglich, die Leitelemente 32 in der mit durchzogenen Linien dargestellten Grenzstreuposition einzustellen. Wenn das Grenzstreuen beendet ist und zum Normalstreuen übergegangen werden soll, werden die Leitelemente 32 in die mit gestrichelten Linien dargestellten Positionen 32' verschwenkt, so daß in diesen Positionen 32' die Leitelemente 32 die Flugbahn der Düngerpartikel nicht beeinflussen. Das Verschwenken der Leitelemente 32 kann mittels einer geeigneten nicht dargestellten Fernbedienungseinrichtung vorgenommen werden.

## Patentansprüche

1. Zentrifugaldüngerstreuer mit einem Vorratsbehälter, zumindest zwei um aufrechte Achsen rotierend angetriebenen und mit Wurfschaufeln (6) besetzten Schleuderscheiben (5), denen das sich im Vorratsbehälter (1) befindliche Düngermaterial über einstellbare Dosierorgane (8) zugeführt wird und mit außerhalb der Rotationsbahn der äußeren Enden der Wurfschaufeln (6) angeordneten und an einem Tragkörper (27,31) angeordnete Leitelemente (18,20,24,26,32) aufweisenden Grenzstreueinrichtung zur Erzeugung eines Streubildes mit einer zur Grenze (5) steil abfallenden Streustärke und zur Begrenzung der Wurfweite der Düngerpartikel bis zur Grenze, wobei nur der Grenze (15) zugewandten Schleuderscheibe (5) eine Grenzstreueinrichtung (17,19,23,25,30) auf der der Grenze (15) zugewandten Seite der Schleuderscheibe (5) angeordnet ist, **dadurch gekennzeichnet, dass** die Leitflächen (26,32) verstellbar an dem Tragkörper (27,31) befestigt sind, dass die Leitelemente (18,20,24,26,32) mittels Schwenkbolzen (28) in ihrem inneren Bereich (34) an dem Tragkörper (27,31) befestigt sind, dass die Grenzstreueinrichtung (17,19,23,25,30) durch das Einstellen der Leitelemente (18,20,24,26,32) gegenüber dem Tragkörper (27,31) in verschiedene Positionen auf unterschiedliche Düngersorten und verschiedene Arbeitsbreiten einstellbar ist.

2. Zentrifugaldüngerstreuer nach Anspruch 1, **dadurch gekennzeichnet, daß** die Leitelemente (18, 20, 24, 26, 32) von der Schleuderscheibe (5) aus gesehen nach hinten und außen gerichtet sind.

3. Zentrifugaldüngerstreuer nach Anspruch 1, **dadurch gekennzeichnet, daß** die Leitelemente (18, 20, 24, 26, 32) aufrecht stehend angeordnet sind.

4. Zentrifugaldüngerstreuer nach einem oder mehreren der vorstehenden Ansprüche, **dadurch gekennzeichnet, daß** die Leitelemente (24) eine in sich verdrehte Leitfläche aufweisen.

5. Zentrifugaldüngerstreuer nach einem oder mehreren der vorstehenden Ansprüche, **dadurch gekennzeichnet, daß** die Leitelemente (24) aus einer aufrechten Leitfläche in eine schräge oder horizontale Leitfläche übergehen.

6. Zentrifugaldüngerstreuer nach einem oder mehreren der vorstehenden Ansprüche, **dadurch gekennzeichnet, daß** die Grenzstreueinrichtung (17, 19, 23, 25, 30) über eine Fernbedienungseinrichtung wahlweise in Grenzstreustellung und in Außerbetriebstellung schwenkbar ist.

7. Zentrifugaldüngerstreuer nach einem oder mehreren der vorstehenden Ansprüche, **dadurch gekennzeichnet, daß** die Grenzstreueinrichtung (17) in vertikaler Richtung in Grenzstreuposition und Außerbetriebsstellung verstellbar ist.

8. Zentrifugaldüngerstreuer nach einem oder mehreren der vorstehenden Ansprüche, **dadurch gekennzeichnet, daß** die Grenzstreueinrichtung (19) in horizontaler Ebene in Grenzstreuposition schwenkbar und/oder verstellbar ist.

9. Zentrifugaldüngerstreuer nach einem oder mehreren der vorstehenden Ansprüche, **dadurch gekennzeichnet, daß** die Grenzstreuvorrichtung (19) um eine zumindest annähernd vertikale Achse in Grenzstreustellung schwenkbar ist.

10. Zentrifugaldüngerstreuer nach einem oder mehreren der vorstehenden Ansprüche, **dadurch gekennzeichnet, daß** die Grenzstreueinrichtung (17, 19, 23, 25, 30) in verschiedene vorzugsweise festlegbare Grenzstreupositionen einstellbar ist.

11. Zentrifugaldüngerstreuer nach einem oder mehreren der vorstehenden Ansprüche, **dadurch gekennzeichnet, daß** die Grenzstreueinrichtung (17, 19, 23, 25, 30) in eine Stellung für das Normalstreuen bringbar ist, in welcher die Leitelemente die Flugrichtung der Düngerpartikel über eine quer zur Fahrtrichtung liegende Begrenzungsebene, die durch die vordere Rotationsbahn der äußeren Teile der Wurfschaufel verläuft, zumindest annähernd nach von begrenzen.

12. Zentrifugaldüngerstreuer nach einem oder mehreren der vorstehenden Ansprüche, **dadurch gekennzeichnet, daß** die Leitelemente (26, 32) der Grenzstreueinrichtung einzeln oder gruppenweise verstellbar angeordnet sind.

13. Zentrifugaldüngerstreuer nach einem oder mehreren der vorstehenden Ansprüche, **dadurch gekennzeichnet, daß** die Leitelemente (32) in eine Stellung innerhalb des Düngerstromes bringbar sind, in welcher sie die Flugbahn der abgeschleuderten Düngerpartikel nicht beeinflussen.

## Claims

1. Centrifugal fertiliser spreader, including a hopper, at least two centrifugal discs (5), which are driven so as to rotate about upwardly extending axes and are fitted with throwing vanes (6), the fertiliser material situated in the hopper (1) being supplied to said discs via adjustable metering members (8), and said spreader including a limited spreading means, which has guide members (18, 20, 24, 26, 32) disposed externally of the rotary path of the outer ends of the throwing vanes (6) and disposed on a supporting member (27, 31), in order to produce a spreading pattern with a spreading strength which drops steeply towards the boundary (15) and in order to limit the throwing width of the fertiliser particles to the boundary, a limited spreading means (17, 19, 23, 25, 30) being disposed on the side of the centrifugal disc (5) facing the boundary (15), **characterised in that** the guide faces (26, 32) are secured in an adjustable manner on the supporting member (27, 31), **in that** the guide members (18, 20, 24, 26, 32) are secured on the supporting member (27, 31) by means of pivot pins (28) in their inner region (34), and **in that**, by setting the guide members (18, 20, 24, 26, 32) into various positions relative to the supporting member (27, 31), the limited spreading means (17, 19, 23, 25, 30) can be set for different types of fertiliser and different working widths.

2. Centrifugal fertiliser spreader according to claim 1, **characterised in that** the guide members (18, 20, 24, 26, 32) are orientated rearwardly and outwardly when viewed from the centrifugal disc (5).

3. Centrifugal fertiliser spreading means according to claim 1, **characterised in that** the guide members (18, 20, 24, 26, 32) are disposed so as to extend upwardly.

4. Centrifugal fertiliser spreader according to one or more of the preceding claims, **characterised in that** the guide members (24) have a guide face which is curved-in on itself.

5. Centrifugal fertiliser spreader according to one or more of the preceding claims, **characterised in that** the guide members (24) pass from an upwardly extending guide face to an inclined or horizontal guide face.

6. Centrifugal fertiliser spreading means according to one or more of the preceding claims, **characterised in that** the limited spreading means (17, 19, 23, 25, 30) is selectively pivotable into the limited spreading position and into the inoperative position via a remote control apparatus.

7. Centrifugal fertiliser spreader according to one or more of the preceding claims, **characterised in that** the limited spreading means (17) is displaceable in the vertical direction into the limited spreading position and into the inoperative position.

8. Centrifugal fertiliser spreader according to one or more of the preceding claims, **characterised in that** the limited spreading means (19) is pivotable and/or displaceable in the horizontal plane into the limited spreading position.

9. Centrifugal fertiliser spreader according to one or more of the preceding claims, **characterised in that** the limited spreading means (19) is pivotable into a limited spreading position about an axis which is at least approximately vertical.

10. Centrifugal fertiliser spreader according to one or more of the preceding claims, **characterised in that** the limited spreading means (17, 19, 23, 25, 30) can be set into various, preferably securable, limited spreading positions.

11. Centrifugal fertiliser spreader according to one or more of the preceding claims, **characterised in that** the limited spreading means (17, 19, 23, 25, 30) can be brought into a position for normal spreading, in which position the guide members limit, at least approximately forwardly, the direction of travel of the fertiliser particles over a boundary plane, which lies transversely relative to the travel direction and extends through the front rotary path of the external parts of the throwing vanes.

12. Centrifugal fertiliser spreader according to one or more of the preceding claims, **characterised in that** the guide members (26, 32) of the limited spreading means are disposed so as to be displaceable individually or in groups.

13. Centrifugal fertiliser spreader according to one or more of the preceding claims, **characterised in that** the guide members (32) can be brought into a position within the stream of fertiliser, in which position said members do not affect the path of travel of the centrifuged fertiliser particles.

## Revendications

1. Epandeur centrifuge d'engrais comprenant un réservoir, au moins deux disques d'épandage (5) entraînés en rotation autour d'axes verticaux, ces disques étant équipés de palettes d'éjection (6),
les disques recevant l'engrais du réservoir (1) par l'intermédiaire d'organes de dosage (8) réglables et des éléments de guidage (18, 20, 24, 26, 32) prévus en dehors de la trajectoire de rotation des extrémités extérieures des palettes d'éjection (6), en étant installés sur un organe de support (27, 31), cette installation d'épandage en limite étant destinée à générer une image d'épandage avec une intensité d'épandage chutant fortement au niveau de la limite (15) et pour limiter la portée d'éjection des particules d'engrais jusqu'à la limite du champ,
seul le disque d'épandage (5) situé du côté de la limite (15) du champ comportant une installation d'épandage en limite (17, 19, 23, 25, 30) installée du côté du disque d'épandage (5) tourné vers la limite (15),
**caractérisé en ce que**
les surfaces de guidage (26, 32) sont fixées de manière réglable au corps de support (27, 31), les éléments de guidage (18, 20, 24, 26, 32) étant fixés à l'aide de goujons (28) au niveau de leur zone intérieure (34) sur le corps de support (27, 31),
l'installation d'épandage en limite (17, 19, 23, 25, 30) pouvant être réglée par le réglage des éléments de guidage (18, 20, 24, 26, 32) par rapport au corps de support (27, 31) dans différentes positions en fonction de différentes sortes d'engrais et de largeurs de travail différentes.

2. Epandeur centrifuge d'engrais selon la revendication 1,
**caractérisé en ce que**
les éléments de guidage (18, 20, 24, 26, 32) sont dirigés vers l'arrière et vers l'extérieur à partir du disque d'épandage (5).

3. Epandeur centrifuge d'engrais selon la revendication 1,
**caractérisé en ce que**
les éléments de guidage (18, 20, 24, 26, 32) sont verticaux.

4. Epandeur centrifuge d'engrais selon l'une quelconque des revendications précédentes.
**caractérisé en ce que**
les éléments de guidage (24) ont une surface de guidage torse.

5. Epandeur centrifuge d'engrais selon l'une quelconque des revendications précédentes.
**caractérisé en ce que**
les éléments de guidage (24) passent d'une surface de guidage verticale à une surface de guidage inclinée ou horizontale.

6. Epandeur centrifuge d'engrais selon l'une quelconque des revendications précédentes,
**caractérisé en ce que**
l'installation d'épandage en limite (17, 19, 23, 25, 30) peut être basculée par une installation de télécommande au choix en position d'épandage de base ou en position de repos.

7. Epandeur centrifuge d'engrais selon l'une quelconque des revendications précédentes,
**caractérisé en ce que**
l'installation d'épandage en limite (17) est réglable dans la direction verticale pour passer dans une position d'épandage en limite ou une position de repos.

8. Epandeur centrifuge d'engrais selon l'une quelconque des revendications précédentes,
**caractérisé en ce que**
l'installation d'épandage en limite (19) peut être basculée et/ou réglée en position d'épandage en limite dans un plan horizontal.

9. Epandeur centrifuge d'engrais selon l'une quelconque des revendications précédentes,
**caractérisé en ce que**
le dispositif d'épandage en limite (19) peut être basculé autour d'un axe sensiblement vertical dans la position d'épandage en limite.

10. Epandeur centrifuge d'engrais selon l'une quelconque des revendications précédentes,
**caractérisé en ce que**
l'installation d'épandage en limite (17, 19, 23, 25, 30) peut être réglée dans différentes positions d'épandage en limite, de préférence y être fixée.

11. Epandeur centrifuge d'engrais selon l'une quelconque des revendications précédentes,
**caractérisé en ce que**
l'installation d'épandage en limite (17, 19, 23, 25, 30) peut être mise dans une position d'épandage normale dans laquelle les éléments de guidage n'influencent pas la trajectoire des particules d'engrais au-dessus d'un plan limite transversal à la direction de déplacement, et passant par la trajectoire de relation avant des parties extérieures des palettes d'éjection, en assurant une limite au moins approximative vers l'avant.

12. Epandeur centrifuge d'engrais selon l'une quelconque des revendications précédentes.
**caractérisé en ce que**
les éléments de guidage (26, 32) de l'installation d'épandage en limite sont réglables séparément ou par groupes.

13. Epandeur centrifuge d'engrais selon l'une quelconque des revendications précédentes,
**caractérisé en ce que**
les éléments de guidage (32) peuvent être mis dans une position à l'intérieur du flux d'engrais dans laquelle il n'influence pas la trajectoire des particules d'engrais éjectées.
